# EUROPÄISCHE PATENTSCHRIFT

(11) **EP 1 926 973 B1**
(45) Veröffentlichungstag und Bekanntmachung des Hinweises auf die Patenterteilung: **07.09.2016**
(21) Anmeldenummer: 06793313.5
(22) Anmeldetag: 07.09.2006
(51) Int. Cl.: G01F 1/66

(54) **VERFAHREN ZUR SYSTEM- UND/ODER PROZESSÜBERWACHUNG BEI EINEM ULTRASCHALL-DURCHFLUSSMESSGERÄT**
METHOD FOR MONITORING AN ULTRASOUND FLOWMETER SYSTEM AND/OR PROCESS
PROCEDE POUR SURVEILLER UN SYSTEME ET/OU UN PROCESSUS D'UN DEBITMETRE A ULTRASONS

(30) Priorität: 22.09.2005 DE 102005045485
(43) Veröffentlichungstag der Anmeldung: 04.06.2008
(73) Patentinhaber: Endress+Hauser Flowtec AG, 4153 Reinach (CH)
(72) Erfinder: BERGER, Andreas, CH-4153 Reinach (CH); BUSSINGER, Klaus, CH-4153 Reinach (CH); FRÖHLICH, Thomas, CH-4142 Münchenstein (CH)
(74) Vertreter: Andres, Angelika Maria
(86) Internationale Anmeldenummer: PCT/EP2006/066115
(87) Internationale Veröffentlichungsnummer: WO 2007/033911

(56) Entgegenhaltungen:
- EP-A2- 0 537 735
- WO-A2-2004/006199
- CA-A1- 2 556 146
- US-A- 5 705 753
- US-A1- 4 109 523
- US-A1- 4 462 261
- US-B1- 6 644 119

## Beschreibung

Die Erfindung betrifft ein Verfahren zur System- und/oder Prozessüber-wachung bei einem Ultraschall-Durchflussmessgerät mit einem oder mehreren Messkanälen, wobei eine Rohrleitung bzw. ein Messrohr von einem Medium in Richtung der Längsachse der Rohrleitung bzw. des Messrohres durch-strömt wird, wobei Ultraschall-Messsignale derart in die Rohrleitung bzw. in das Messrohr ein- bzw aus der Rohrleitung bzw. dem Messrohr ausgekoppelt werden, dass sie das Medium auf unterschiedlichen Schallpfaden durchlaufen und wobei die Ultraschall-Messsignale nach dem Durchgang durch die Rohrleitung bzw. durch das Messrohr in den einzelnen Messkanälen detektiert werden. Bei dem Ultraschall-Durchflussmessgerät kann es sich um ein Inline-Durchflussmessgerät oder um ein Clamp-On-Durchflussmessgerät handeln.

Der Stand der Technik, gegeben durch die Patentschrift US4109523 lehrt die Korrektur eines gemessenen Durchflussmesswerts bei einem mehrkanaligen Ultraschall-Durchflussmessgerät. Hintergrund dabei ist, dass ein ideales Strömungsprofil bei einer Durchflussmessung häufig nicht mit der Realität übereinstimmt. Durch die Auswertung der gemessenen Durchflusswerte verschiedener Messkanäle wird ein tatsächliches Strömungsprofil ermittelt und basierend darauf ein Korrekturwert des Durchflussmesswert berechnet.

Im Zusammenhang mit der Bestimmung und/oder Überwachung von Prozessgrößen in der Prozessautomation geht die Tendenz zunehmend in die Richtung, dem Anwender neben dem eigentlichen Messwert, der beispiels-weise den Durchfluss, den Druck, den Füllstand, die Temperatur, die Leitfähigkeit oder die Ionenkonzentration repräsentiert, auch Information über die aktuelle oder künftige Funktionalität oder die Lebensdauer des Messgeräts unter den jeweils vorherrschenden System- und/oder Prozessbedingungen zur Verfügung zu stellen. Gängige Schlagworte sind in diesem Zusammen-hang: 'Predictive Maintenance', 'Advanced Diagnostics' und 'Meantime Before Failure'. Ziel dieser Bemühungen ist es letztendlich, Stand- und Ausfallzeiten eines Messgeräts auszuschließen oder auf ein Minimum zu reduzieren und die Qualität der gelieferten Messwerte zu erhöhen.

Der Erfindung liegt die Aufgabe zugrunde, ein Verfahren vorzuschlagen, das es ermöglicht, aktuelle und vorausschauende Aussagen hinsichtlich der Funktionalität eines Ultraschall-Durchflussmessgeräts bereitzustellen.

Die Aufgabe wird gemäß einer ersten Ausgestaltung dadurch gelöst, dass jeweils zumindest eine das Ultraschall-Messsignal eines jeden Messkanals beschreibende Istgröße ermittelt wird, dass die Istgröße mit einer unter vorgegebenen System- oder Prozessbedingungen abgespeicherten Sollgröße verglichen wird und dass im Falle einer Abweichung zwischen der ermittelten Istgröße und der abgespeicherten Sollgröße eine Meldung ausgegeben wird. Gemäß einer vorteilhaften Weiterbildung des erfindungsgemäßen Verfahrens ist vorgesehen, dass die Meldung ausgegeben wird, wenn die Istgröße außerhalb einer vorgegebenen Toleranz zur Sollgröße liegt. Insbesondere ist diese Lösung dazu geeignet, Aussagen hinsichtlich der Funktionalität des Durchflussmessgeräts zu liefern. Die Sollgröße wird beispielsweise bei Inbetriebnahme des Durchflussmessgeräts bestimmt, oder sie wird nach Erreichen eines stationären Zustands ermittelt und abgespeichert. Bei der ausgegebenen Fehlermeldung handelt es sich beispielsweise um einen Bodysound, die Ausgabe der Meldung 'Signal Low', oder es wird das jeweilige Signal/Rauschverhältnis ausgegeben.

Bevorzugt wird im Zusammenhang mit dem erfindungsgemäßen Verfahren die Signalstärke der Ultraschall-Messsignale als Istgröße herangezogen. So ist insbesondere vorgesehen, dass im Falle einer Änderung der Istgröße 'Signalstärke' gegenüber der abgespeicherten Sollgröße 'Signalstärke' die Meldung ausgegeben wird, dass ein stärker absorbierendes bzw. schwächer absorbierendes Medium die Rohrleitung bzw. das Messrohr durchströmt. Darüber hinaus wird vorge-schlagen, dass im Falle einer Abweichung der Istgröße 'Signalstärke' im ersten Messkanal gegenüber der Istgröße 'Signalstärke' im zweiten Mess-kanal die Meldung ausgegeben wird, dass im Bereich des Messkanals ein Systemfehler aufgetreten ist oder dass in dem Messkanal eine Verschmutzung aufgetreten ist. Im Falle eines Clamp-On-Durchfluss-messgeräts kann es sich um ein Koppelproblem zwischen Ultraschallsensor und Rohrwand handeln. Ändert sich hingegen die Signalstärke in allen Messkanälen gleichzeitig, so kann daraus der Schluss gezogen werden, dass ein Applikationsfehler aufgetreten ist. Durch die vergleichende Methode kann das Durchflussmessgerät eine Selbstdiagnose durchführen und dem Anwender entsprechende Vorschläge zur Behebung des Problems machen oder Anleitungen zur Fehleranalyse geben. Aus den gemessenen Prozessgrößen und den Signalveränderungen auf einzelnen oder allen Messkanälen kann darüber hinaus ein Trend dargestellt werden. So ist es insbesondere auch möglich, dem Anwender einen Termin für die nächste Inspektion des Durchflussmessgeräts vorzuschlagen.

Es lässt sich auch die Schallgeschwindigkeit zu Analyse-zwecken heranziehen: Ändert sich die Schallgeschwindigkeit in allen Messkanälen bei gleichbleibendem Medium simultan, so wird dies als Hinweis auf eine Temperaturänderung des Mediums gewertet, und es erfolgt eine entsprechende Ausgabe. Tritt hingegen eine Abweichung der in den einzelnen Messkanälen gemessenen Schallgeschwindigkeiten auf, so wird die Meldung ausgegeben, dass das Medium aus mehreren Phasen besteht.

Die Erfindung wird anhand der nachfolgenden Figuren näher erläutert. Es zeigt:
Fig. 1: eine schematische Darstellung eines Ultraschall-Durchflussmessgeräts zur Durchführung des erfindungsgemäßen Verfahrens und
Fig. 2: ein Flussdiagramm, das eine bevorzugte Ausführungsform des erfindungsgemäßen Verfahrens verdeutlicht.

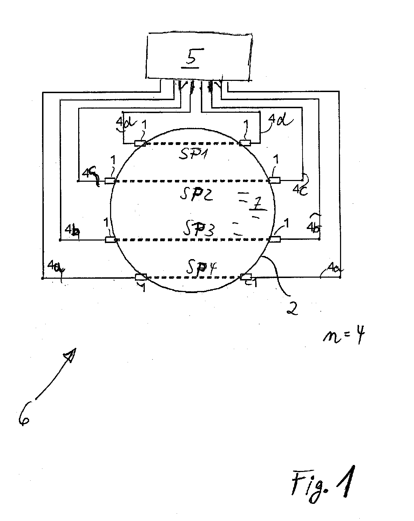

Fig. 1 zeigt eine schematische Darstellung einer ersten Ausführungsform des erfindungsgemäßen Ultraschall-Durchflussmessgeräts 6. Bei dem Ultraschall-Durchflussmessgerät 6 handelt es sich entweder um ein Inline-Durchflussmessgerät, bei dem die Ultraschallsensoren 1 in die Rohrwand eines Mess-rohres 2 integriert sind, oder um ein Clamp-On Durchflussmessgerät, bei dem die Ultraschallsensoren 1 von außen über einen Befestigungsmechanismus an der Rohrleitung 2 fixiert sind. Beide Typen von Ultraschall-Durchfluss-messgeräten 6 werden von der Anmelderin angeboten und vertrieben.

Um das Strömungsprofil des in der Rohrleitung 2 bzw. in dem Messrohr strömenden Messmediums 7 mit hoher Messgenauigkeit bestimmen zu können, sind vier Paare von Ultraschallsensoren 1 über den Umfang verteilt an der Rohrleitung 2 bzw. an dem Messrohr angeordnet. Die Strömungs-geschwindigkeit bzw. der Volumen- oder Massedurchfluss des Mediums 7 durch die Rohrleitung 2 bzw. durch das Messrohr wird im gezeigten Fall über die Laufzeitdifferenz von Ultraschall-Messsignalen bestimmt, die das Medium 7 in Strömungsrichtung und entgegen der Strömungsrichtung durchlaufen.

Die Messwerte aus den einzelnen Messkanälen 4a, 4b, 4c, 4d werden von den Ultraschallsensoren 1 an die Regel-/Auswerteeinheit 5 weitergeleitet. Darüber hinaus initiiert die Regel-/Auswerteeinheit 5 die Aussendung der Ultraschall-Messsignale in den einzelnen Messkanälen SP1, ... SP4 und berechnet anhand der Laufzeitdifferenz der Ultraschall-Messsignale in entgegengesetzten Richtungen den Volumen- bzw. den Massedurchfluss des Mediums 7 in der Rohrleitung 2. Aufgrund der radiusabhängigen Verteilung der vier Paare von Ultraschallsensoren 1 an der Rohrleitung 2 ist es möglich, den Durchfluss in der Rohrleitung 2 ortsaufgelöst zu bestimmen. Hierdurch wird es ermöglicht, eine hohe Messgenauigkeit selbst bei unterschiedlichsten Strömungsverhältnissen in der Rohrleitung 2 zu erreichen.

Die Regel-/Auswerteeinheit 5 liefert neben den Durchflussmesswerten erfindungsgemäß Information über aktuelle und/oder vorausschauende Aussagen, die die Funktionalität des Ultraschall-Durchflussmessgeräts 6 betreffen. Weiterhin ist es mittels des erfindungsgemäßen Verfahrens möglich, Information über Prozess- und/oder Systemänderungen zur Verfügung zu stellen.

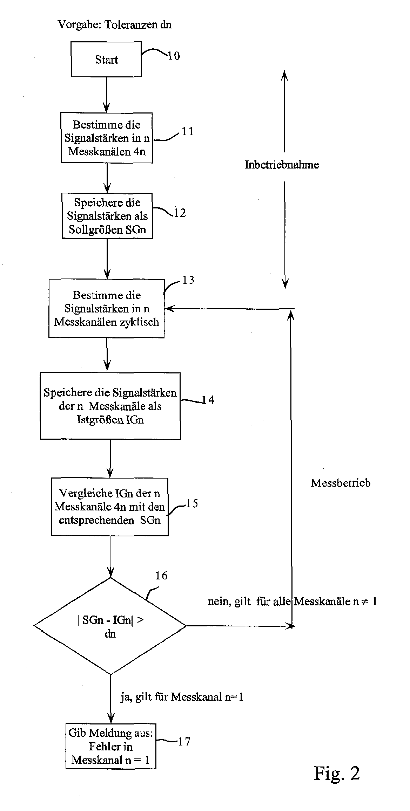

In Fig. 2 ist ein Flussdiagramm dargestellt, welches eine bevorzugte Ausführungsform des erfindungsgemäßen Verfahrens wiedergibt. Zulässige Toleranzwerte dn für die n Messkanäle 4n, mit n = 1, 2, ...m sind vorgegeben. Das Programm wird bei Programmpunkt 10 gestartet. Nach Inbetriebnahme des Durchflussmessgeräts 1 werden die Sollgrößen SGn in den einzelnen Messkanälen 4n erfasst (Programmpunkt 11). Im dargestellten Fall handelt es sich bei den Sollgrößen SGn jeweils um die Signalstärke der Ultraschall-Messsignale. Anschließend werden die unter vorgegebenen System- und oder Prozessbedingungen ermittelten Sollgrößen SGn bei Punkt 12 abgespeichert.

Im nachfolgenden Messbetrieb werden jeweils die aktuellen Signalstärken in den einzelnen n Messkanälen 4n zyklisch bestimmt (Punkt 13) und unter Programmpunkt 14 als Istgrößen IGn abgespeichert Bei Programmpunkt 15 werden die aktuell gemessenen Istgrößen IGn mit den entsprechenden abgespeicherten Sollgrößen SGn verglichen. Ist die Betrag der Differenz der Sollgrößen SGn und der Istgrößen IGn größer als oder gleich der vorgegebenen Toleranz dn, so erfolgt eine Meldung. Im gezeigten Fall liegt die Differenz von Istgröße IG1 und Sollgröße SG1 außerhalb der Toleranz d1, während die Abweichungen in den weiteren Messkanälen innerhalb der vorgegebenen Toleranzen liegen. Dies ist ein eindeutiger Hinweis darauf, dass in dem Messkanal mit n=1 ein Fehler aufgetreten ist. Ursache für den Fehler kann eine Verschmutzung in dem entsprechenden Messkanal sein. Weiterhin ist es möglich, dass einer der beiden Ultraschallsensoren 1 im Messkanal mit n=1 defekt ist. Um eine differenziertere Aussage zu erhalten, ist es möglich, sich die abgespeicherten Historiendaten aus dem Messkanal mit n=1 anzuschauen. Hieraus lässt sich beispielsweise ablesen, ob der Fehler schleichend aufgetreten ist - was den Schluß auf eine Verschmutzung zulässt - oder ob der Fehler abrupt aufgetreten ist, was auf einen Defekt eines der beiden Ultraschallsensoren in dem entsprechenden mit n=1 gekenn-zeichneten Messkanal hindeutet.

Durch den Vergleich von aktuell gemessenen Istgrößen IGn mit entsprechend abgespeicherten Sollgrößen SGn und/oder durch den Vergleich der aktuell gemessenen und ggf. zyklisch abgespeicherten Istgrößen in den einzelnen Messkanälen 4n lässt sich erfindungsgemäß neben der ortaufgelösten Information über den Durchfluss durch die Rohrleitung bzw. durch das Messrohr auch Information über die Funktionalität des Durchflussmessgeräts 6 und/oder über Änderungen in den herrschenden Prozess- und/oder Systembedingungen generieren. Diese dient einerseits dazu, die Mess-Performance eines Durchflussmessgeräts 6 zu verbessern, und sie ist andererseits dazu geeignet, auftretende Fehlfunktionen frühzeitig zu erkennen und umgehend zu beheben.

## Patentansprüche

1. Verfahren zur Systemüberwachung bei einem Ultraschall-Durchflussmessgerät (6) mit mehreren Messkanälen (4a, 4b, 4c, 4d), wobei eine Rohrleitung (2) bzw. ein Messrohr von einem Medium (7) in Richtung der Längsachse der Rohrleitung (2) bzw. des Messrohres durchströmt wird, wobei Ultraschall-Messsignale derart in die Rohrleitung (2) bzw. in das Messrohr ein- bzw. aus der Rohrleitung (2) bzw. dem Messrohr ausgekoppelt werden, dass sie das Medium (7) auf unterschiedlichen Schallpfaden (SP1, ..., SP4) durchlaufen, wobei die Ultraschall-Messsignale nach dem Durchgang durch die Rohrleitung (2) bzw. durch das Messrohr in den einzelnen Messkanälen (4a, 4b, 4c, 4d) detektiert werden,
**dadurch gekennzeichnet,**
**dass** jeweils zumindest eine das Ultraschall-Messsignal eines jeden Messkanals (4a; 4b; 4c; 4d) beschreibende Istgröße (IG1, IG2, IG3, IG4) ermittelt wird, wobei die Istgröße (IG1, IG2, IG3, IG4) mit einer unter vorgegebenen System- oder Prozessbedingungen abgespeicherten entsprechenden Sollgröße (SG1, SG2, SG3, SG4) verglichen wird und wobei im Falle einer Abweichung
zwischen der ermittelten Istgröße (IG1, IG2, IG3, IG4) und der abgespeicherten entsprechenden Sollgröße (SG1, SG2, SG3, SG4) eine Meldung ausgegeben wird, wobei als Istgröße (IG1, IG2, IG3, IG4) eine Signalstärke der Ultraschall-Messsignale herangezogen wird.

2. Verfahren nach Anspruch 1,
**dadurch gekennzeichnet,**
**dass** die Meldung ausgegeben wird, wenn die Istgröße (IG1, IG2, IG3, IG4) außerhalb einer vorgegebenen Toleranz zur Sollgröße (SG1, SG2, SG3, SG4) liegt.

3. Verfahren nach Anspruch 1,
**dadurch gekennzeichnet,**
**dass** die gemessenen Istgrößen (IG1, IG2, IG3, IG4) zyklisch abgespeichert werden.

4. Verfahren nach Anspruch 3,
**dadurch gekennzeichnet,**
**dass** anhand der zyklisch gemessenen und abgespeicherten Istgrößen (IG1, IG2, IG3, IG4) Historiendaten, die tendenzielle System- oder Prozessänderungen wiedergeben, zur Verfügung gestellt werden.

5. Verfahren nach Anspruch 1,
**dadurch gekennzeichnet,**
**dass** im Falle einer Änderung der Istgröße gegenüber der abgespeicherten Sollgröße die Meldung ausgegeben wird, dass ein stärker absorbierendes bzw. schwächer absorbierendes Medium (7) die Rohrleitung (2) bzw. das Messrohr durchströmt.

## Claims

1. Procedure for system monitoring on an ultrasonic flowmeter (6) with multiple measurement channels (4a, 4b, 4c, 4d), wherein a medium (7) flows through a pipe (2) or measuring tube (7) in the direction of the longitudinal axis of the pipe (2) or the measuring tube, wherein ultrasonic measuring signals are coupled into the pipe (2) or measuring tube or out of the pipe (2) or measuring tube in such a way that they pass through the medium (7) at different sound paths (SP1, ..., SP4), wherein the ultrasonic measuring signals are detected in the individual measuring channels (4a, 4b, 4c, 4d) after passing through the pipe (2) or through the measuring tube,
**characterized in that**
at least one actual variable (IG1, IG2, IG3, IG4) describing the ultrasonic measuring signal of each measuring channel (4a, 4b, 4c, 4d) is determined in each case, wherein said actual variable (IG1, IG2, IG3, IG4) is compared with a corresponding target variable (SG1, SG2, SG3, SG4) saved under predefined system or process conditions, and wherein if a deviation is detected between the determined actual variable (IG1, IG2, IG3, IG4) and the corresponding saved target variable (SG1, SG2, SG3, SG4) a message is displayed, wherein a signal intensity of the ultrasonic measuring signals is used as the actual variable (IG1, IG2, IG3, IG4).

2. Procedure as claimed in Claim 1,
**characterized in that**
the message is displayed if the actual variable (IG1, IG2, IG3, IG4) is outside a predefined tolerance in relation to the target variable (SG1, SG2, SG3, SG4).

3. Procedure as claimed in Claim 1,
**characterized in that**
the actual variables measured (IG1, IG2, IG3, IG4) are saved cyclically.

4. Procedure as claimed in Claim 3,
**characterized in that**
history data that reflect trends in system or process changes are made available on the basis of the actual variables (IG1, IG2, IG3, IG4) that are cyclically measured and saved.

5. Procedure as claimed in Claim 1,
**characterized in that**
in the event of a change in the actual variable in relation to the saved target variable, the message indicating that a medium (7) with stronger absorption or weaker absorption is flowing through the pipe (2) or measuring tube is displayed.

## Revendications

1. Procédé destiné à la surveillance du système pour un débitmètre ultrasonique (6) disposant de plusieurs canaux de mesure (4a, 4b, 4c, 4d), procédé pour lequel une conduite (2) ou un tube de mesure est parcouru par un produit (7) en direction de l'axe longitudinal de la conduite (2) ou du tube de mesure, procédé pour lequel les signaux de mesure ultrasonores sont injectés dans la conduite (2) ou dans le tube de mesure, ou sont extraits de la conduite (2) ou du tube de mesure de telle sorte qu'ils traversent le produit (7) sur différentes trajectoires ultrasonores (SP1, ..., SP4), les signaux de mesure ultrasonores étant détectés après le passage à travers la conduite (2) ou à travers le tube de mesure dans les différents canaux de mesure (4a, 4b, 4c, 4d),
**caractérisé**
**en ce qu'**est déterminée respectivement au moins une grandeur réelle (IG1, IG2, IG3, IG4) décrivant le signal de mesure ultrasonore de chaque canal de mesure (4a, 4b, 4c, 4d), la grandeur réelle (IG1, IG2, IG3, IG4) étant comparée à une grandeur de consigne (SG1, SG2, SG3, SG4) correspondante, enregistrée dans des conditions prédéfinies du système et du process, et un message étant émis en cas d'écart entre la grandeur réelle (IG1, IG2, IG3, IG4) déterminée et la grandeur de consigne (SG1, SG2, SG3, SG4) correspondante enregistrée, une intensité des signaux de mesure ultrasonores étant utilisée en tant que grandeur réelle (IG1, IG2, IG3, IG4).

2. Procédé selon la revendication 1,
**caractérisé**
**en ce que** le message est émis lorsque la grandeur réelle (IG1, IG2, IG3, IG4) se situe en dehors d'une tolérance prédéfinie relative à la grandeur de consigne (SG1, SG2, SG3, SG4).

3. Procédé selon la revendication 1,
caractérisé
en ce les grandeurs réelles mesurées (IG1, IG2, IG3, IG4) sont enregistrées de façon cyclique.

4. Procédé selon la revendication 3,
**caractérisé**
**en ce qu'**au moyen des grandeurs réelles (IG1, IG2, IG3, IG4) mesurées et enregistrées de façon cyclique, sont mises à disposition des données historiques qui reflètent des variations tendancielles du système ou du process.

5. Procédé selon la revendication 1,
**caractérisé**
**en ce qu'**en cas de modification de la grandeur réelle par rapport à la grandeur de consigne enregistrée, est délivré un message indiquant qu'un produit (7) plus fortement absorbant ou moins fortement absorbant parcourt la conduite (2) ou le tube de mesure.
